## Europäisches Patentamt

## European Patent Office

## Office européen des brevets

(11) Veröffentlichungsnummer: **0 134 537**
**B1**

(12) **EUROPÄISCHE PATENTSCHRIFT**

(45) Veröffentlichungstag der Patentschrift:
08.06.88

(21) Anmeldenummer: **84109158.0**

(22) Anmeldetag: **02.08.84**

(51) Int. Cl.⁴: **B 62 K 17/00**

㊴ **Laufrad.**

(30) Priorität: **04.08.83 DE 3328103**

(43) Veröffentlichungstag der Anmeldung:
**20.03.85 Patentblatt 85/12**

(45) Bekanntmachung des Hinweises auf die Patenterteilung:
**08.06.88 Patentblatt 88/23**

(84) Benannte Vertragsstaaten:
**AT BE CH FR GB IT LI NL**

(56) Entgegenhaltungen:
**CH-A-176 970**
**DE-C-649 433**
**DE-U-7 530 321**
**FR-A-545 657**
**GB-A-29 499**
**US-A-1 373 814**
**US-A-1 668 623**

(73) Patentinhaber: **Ossenbrink, Baldur, Paul- Linde-Strasse 31, D-4730 Ahlen (DE)**

(72) Erfinder: **Ossenbrink, Baldur, Paul- Linde- Strasse 31, D-4730 Ahlen (DE)**

(74) Vertreter: **Habbel, Hans- Georg, Dipl.- Ing., Postfach 3429 Am Kanonengraben 11, D-4400 Münster (DE)**

LIBER, STOCKHOLM 1988

## Beschreibung

Die Erfindung bezieht sich auf ein Laufrad gemäß dem Oberbegriff des Hauptanspruches. Ein derartiges Laufrad ist aus der DE-U-7 530 321 bekannt.

Seitdem die sogenannte "Draisine" im Jahre 1817 vorgestellt wurde, sind Laufräder bekannt. Die Draisine gilt als Vorläufer der Fahrräder und weist einen in einer bestimmten Höhe starr verbleibenden Sattel auf, der, um eine gewisse Schrittweite beim Laufen zu ermöglichen, relativ niedrig angeordnet sein muß. Dadurch sind die Füße, wenn sie sich weit vorne oder weit hinten befinden, zwar sehr stark vom Körpergewicht entlastet, in der Mitte jedoch, wo der Abstand zwischen dem Sattel und dem Boden wesentlich geringer ist als die Beinlänge des Läufers, müssen die Beine nahezu das gesamte Körpergewicht tragen.

Insgesamt ist der Bewegungsablauf beim Benutzen eines derartigen Laufrades so unnatürlich, daß die Entwicklung zu den Fahrrädern ging und Laufräder heute als Fortbewegungsmittel keine Rolle mehr spielen.

Die der Erfindung zugrundeliegende Aufgabe besteht darin, ein Hilfsmittel für Läufer zu schaffen, mit dem die Füße von dem auflastenden Körpergewicht entlastet werden und bei dem der natürliche Bewegungsablauf beim Laufen weitestgehend beibehalten werden kann.

Diese der Erfindung zugrundeliegende Aufgabe wird durch die Merkmale des Anspruchs 1 gelöst.

Vorzugsweise wird dabei ein Laufrad verwendet mit einer Rahmenbrücke, an der der Sattel befestigt ist sowie zwei vertikal um horizontale Achsen drehbare Schwingen, die an ihren bodenseitigen Enden jeweils ein Rad aufweisen, wobei die beiden Schwingen miteinander durch Federelemente verbunden sind.

Eine höhenverstellbare Befestigung des Sattels bietet dabei die Möglichkeit, die Verwendung des Laufrades den unterschiedlichsten Körpergrößen anzupassen.

Eine höhenverstellbare Festlegung der Federelemente im mittleren Bereich zwischen den beiden Schwingen ermöglicht eine verschiedenartige Vorspannung der Federn zu erzielen und damit die Anpassung des Laufrades an verschiedene Körpergewichte.

Vorteilhafterweise weist ein erfindungsgemäßes Laufrad die Abwärtsbewegung der Schwingen begrenzende Anschläge auf, um eine zueinanderführende Bewegung der beiden Schwingen zu begrenzen, wenn das Laufrad entlastet ist.

Weiterhin weist das Laufrad vorteilhafterweise die Aufwärtsbewegung der Schwingen begrenzende Anschläge auf, damit bei einer starken Belastung die Sattelfläche nicht bis in Bodennähe durchsacken kann.

Dadurch, daß die Räder nachlaufend an den Schwingen angeordnet sind, wird eine gute Spurstabilität des Laufrades erreicht.

Weitere vorteilhafte Ausgestaltungen sind in den Unteransprüchen definiert.

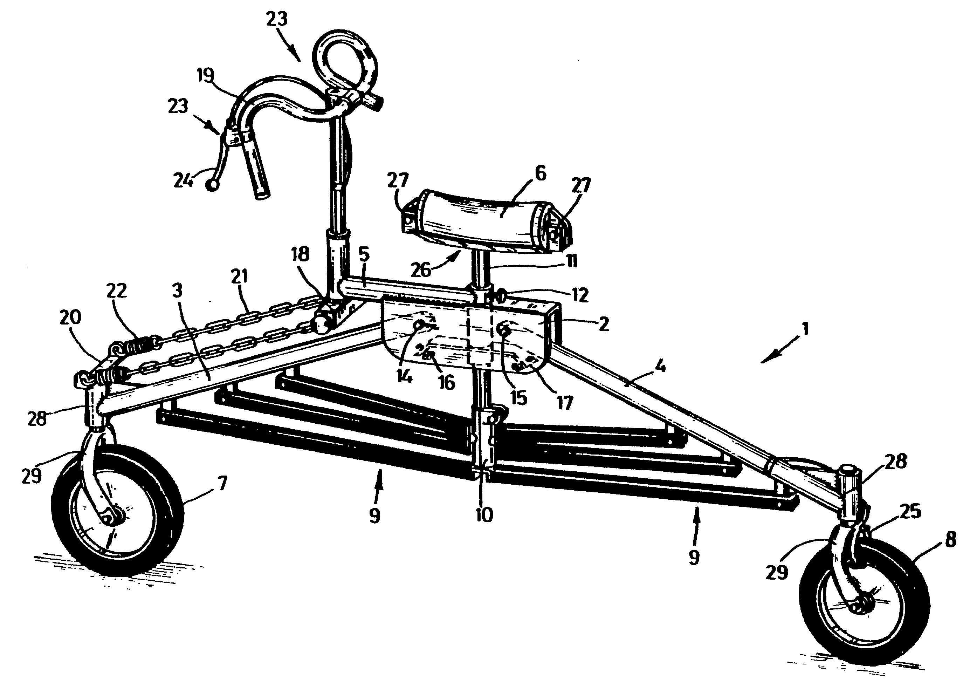

Die Zeichnung zeigt ein Ausführungsbeispiel eines erfindungsgemäßen Laufrades.

In der Zeichnung ist mit 1 ein Laufrad bezeichnet, welches einen Rahmen aufweist, der aus einer Rahmenbrücke 2 besteht, an der eine vordere Schwinge 3 und eine hintere Schwinge 4 vertikal drehbar um horizontale Achsen 12, 14 befestigt sind. Weiterhin ist an der Rahmenbrücke 2 eine nach vorne weisende Lenkerhalterung 5 befestigt sowie ein Sattel 6.

Die beiden Schwingen 3 und 4 weisen an ihren bodenseitigen Enden ein Vorderrad 7 bzw. ein Hinterrad 8 auf und sind miteinander durch Federelemente in Form von Gummispannfedern 9 verbunden. Die Gummispannfedern 9 führen jedoch nicht direkt von der vorderen Schwinge 3 zur hinteren Schwinge 4, sondern sind im wesentlichen in ihrem mittleren Bereich an einem höhenverstellbar ausgebildeten Einstellrohr 10 festgelegt.

Das Einstellrohr 10 ist mit einer schellenartigen Klemmeinrichtung höhenverstellbar an einem Sattelrohr 11 befestigt, welches in einem Führungsrohr 12 innerhalb der Rahmenbrücke 2 höhenverstellbar geführt wird.

Durch diese voneinander unabhängige Höhenverstellbarkeit sowohl des Sattels 6 als auch der Gummispannfedern 9 wird erreicht, daß die Höhe des Sattels in Abhängigkeit von der Größe des Benutzers eingestellt werden kann und daß unabhängig von dieser Größe eine Anpassung an die unterschiedlichen Gewichte der Benutzer dadurch erzielt werden kann, daß die Vorspannung der Gummispannfedern 9 durch eine verschieden hohe Anordnung des Einstellrohres 10 verändert werden kann. Wird zum Beispiel das Einstellrohr 10 weit nach oben bewegt, so werden die Gummispannfedern 9 gegenüber dem in der Zeichnung dargestellten Zustand entlastet, so daß die Gummispannfedern 9 früher ansprechen und weicher wirken, was bei der Benutzung durch leichtere Personen wünschenswert ist.

Wird dagegen das Einstellrohr 10 weiter nach unten gedrückt, so werden die Gummispannfedern 9 vorgespannt, was bei der Benutzung des Laufrades durch schwerere Personen vorteilhaft ist.

Diese voneinander unabhängige Anpaßbarkeit an sowohl die Größe als auch das Gewicht des Läufers kann abweichend von der in der Zeichnung dargestellten Anordnung auch dadurch bewirkt werden, daß nicht das Sattelrohr 11 durch das Führungsrohr 12 weit hindurchgeht und unten das Einstellrohr 10 trägt, sondern daß beispielsweise das Sattelrohr 11 kürzer als in der Zeichnung dargestellt ausgebildet ist und aus dem unteren Ende des Führungsrohres 12 nicht herausragt und daß dafür das Führungsrohr 12 länger ausgebildet ist, so daß das Einstellrohr 10 direkt an dem Führungsrohr 12 befestigt ist.

Um die Drehbewegungen der Schwingen 3 und 4, die um Achsen 14 und 15 verlaufen, zu begrenzen, damit nicht durch die Spannung der Gummispannfeder 9 die beiden Schwingen 3 und 4 in eine nahezu senkrechte Stellung gezogen werden, sind im Inneren der Rahmenbrücke 2 verstellbare Anschläge 16 und 17 vorgesehen. Eine Veränderung dieser Anschläge 16 und 17 bewirkt sowohl eine Veränderung der Federvorspannung dadurch, daß die Weite zwischen den beiden Schwingen 3 und 4 verändert wird, als auch eine Veränderung der Sattelhöhe dadurch, daß bei einer Spreizung der Schwingen 3 und 4 die Sattelhöhe abnimmt.

Um andererseits aber auch zu verhindern, daß bei besonders schwerer Belastung die Schwingen soweit auseinandergespreizt werden, daß das Einstellrohr 10 bzw. das Sattelrohr 11 den Boden berühren würde, ist im oberen Bereich der Rahmenbrücke 2 für die hintere Schwinge 4 ein Anschlag durch den waagerechten Bereich der Rahmenbrücke 2 gegeben und für die vordere Schwinge 3 besteht der Anschlag in einem oberen Lenkhebel 18 im vorderen Bereich der Lenkerhalterung 5.

Der obere Lenkhebel 18 ist mit einem Lenker 19 verbunden und dreht sich mit diesem um eine senkrechte Achse. Ein unterer Lenkhebel 20, der mit dem um eine senkrechte Achse drehbar gelagerten Vorderrad 7 fest verbunden ist, wirkt mit dem oberen Lenkhebel 18 zusammen, da die beiden äußeren Enden eines jeden Lenkhebels mit den entsprechenden äußeren Enden des anderen Lenkhebels längenveränderlich verbunden sind.

Diese längenveränderliche Verbindung besteht aus einer Kette 21, die im Bereich des unteren Lenkhebels 20 jeweils eine Zugfeder 22 aufweist, so daß der Abstand zwischen den beiden Lenkhebeln veränderlich ist. Da die Achse 14 und der obere Lenkhebel 18 sich im wesentlichen auf gleicher Höhe befinden, würde der Abstand zwischen dem oberen Lenkhebel 18 und dem unteren Lenkhebel 20 in etwa der Länge der vorderen Schwinge 3 entsprechen, wenn diese senkrecht nach unten weisen würde. Sobald die vordere Schwinge 3 aber im wesentlichen waagerecht ausgerichtet ist, ist der Abstand zwischen dem oberen Lenkhebel 18 und dem unteren Lenkhebel 20 um das Maß kleiner als die Länge der vorderen Schwinge 3, welches dem Abstand zwischen dem oberen Lenkhebel 18 und der Achse 14 entspricht. Bei einer Federbewegung des Laufrades verändert sich die Stellung der vorderen Schwinge 3 und damit ändert sich auch der Abstand zwischen dem oberen Lenkhebel und dem unteren Lenkhebel 20. Neben der abgebildeten Ausführungsform wäre eine Übertragung der Lenkbefehle beispielsweise durch teleskopierende Rohre od. dgl. auch möglich.

Da beim Laufen normalerweise die Hände im wesentlichen senkrecht gehalten werden, weist der Lenker 19 senkrechte Bereiche 23 auf, so daß die Handhaltung des Läufers beim Benutzen des Laufrades ebenfalls senkrecht sein kann. Es sind jedoch auch andere Handhalterungen möglich. Für diese bevorzugte Handhaltung griffgünstig angeordnet ist ein Bremshebel 24 zum Betätigen einer auf das Hinterrad 8 wirkenden Bremse 25 mittels eines Bowdenzuges.

Um neben der laufgerechten Handhaltung den Bewegungsablauf des Laufens so wenig wie möglich zu beeinträchtigen, weist der Sattel 6 eine langgestreckte schmale Form auf und wird durch ein lederumhülltes luftgefülltes Kissen gebildet, dessen Härte durch unterschiedlichen Luftdruck verstellbar ist, wobei die dazu notwendigen Ventilmittel od. dgl. nicht dargestellt sind.

Eine den Sattel tragende Rahmenkonstruktion 26 weist an ihren beiden längsseitigen Enden lösbare Befestigungsmittel in Form von Schrauben 27 auf, mit deren Hilfe der eigentliche Sattel 6 aus der Rahmenkonstruktion 26 entfernbar festgelegt wird, so daß ein Austauschen gegen einen anderen Sattel mit beispielsweise anderer Oberfläche oder anderem Innenelement ermöglicht wird.

Die Anordnung der beiden Räder 7 und 8 an den bodenseitigen Enden der Schwingen 3 und 4 erfolgt über um senkrechte Achsen 28 drehbar gelagerte Gabeln 29, die so gestaltet sind, daß die Räder 7 und 8 nachlaufend angeordnet sind, so daß eine selbständige Spurstabilisierung der Räder während des Laufens erfolgt.

Mit einem derartigen Laufrad ist nicht nur eine sehr gute Anpaßbarkeit des Federverhaltens an das jeweilige Gewicht des Läufers möglich, sondern es ist auch möglich, ein Laufrad zum Trainieren des Laufens zu benutzen, beispielsweise nach schweren Operationen, wobei der Patient mehrere Wochen oder Monate gelegen hat. Zu diesem Zweck kann die Federvorspannung so hart eingestellt werden, daß das vom Patienten selbst zu tragende Körpergewicht sehr gering ist und dieser Anteil des selbstzutragenden Gewichtes kann im Laufe der Zeit nach und nach gesteigert werden, bis der Patient aus eigener Kraft wieder vollkommen sicher gehen kann.

Um bei derartigen Einsätzen des Laufrades die Sicherheit des Patienten weiter zu erhöhen, ist es möglich, statt des hinteren Rades 8 eine Achse durch die hintere Gabel 29 zu stecken, an deren beiden Außenseiten sich jeweils ein Rad befindet, so daß das Laufrad nicht mit zwei, sondern mit drei Rädern auf dem Boden aufsteht und damit kippsicher ausgebildet ist. Ebenfalls ist es möglich, zusätzlich zum Hinterrad 8 zwei Stützräder auf jeder Seite des Laufrades anzubringen, so daß die Funktion der Bremse 25 auf das Hinterrad 8 nicht eingeschränkt wird und eine erwünschte Kippsicherheit ebenfalls erzielt wird.

Bei den unterschiedlichen Einsatzmöglichkeiten des Laufrades zu sportlichen oder auch therapeutischen Zwecken ermöglicht das Laufrad in jedem Fall die Beibehaltung des natürlichen Bewegungsablaufes beim Laufen dadurch, daß es die Auf- und Abbewegung des Läufers durch ein Einfedern der Sattelhöhe mitvollzieht. Dabei können die Füße des Läufers vom auflastenden Körpergewicht weitestgehend entlastet werden, so daß das Zurücklegen von langen Strecken oder von Strecken mit hoher Geschwindigkeit für Sportler bzw. das Laufenlernen für rekonvalestierende Patienten durch das Laufrad wesentlich erleichtert wird.

**Patentansprüche**

1. Laufrad, dessen sich etwa horizontal erstreckender Rahmen in seinem zwischen dem durch einen Lenker drehbar in einem am Rahmen festgelegten Gabelrohr gehaltenen Vorderrad und der Hinterradanordnung liegenden mittleren Bereich eine etwa vertikal verlaufende Führungshülse trägt, die eine sie durchgreifende, an ihrem oberen Ende einen Sattel tragende Sattelstütze höhenverstellbar aufnimmt, <u>dadurch gekennzeichnet</u>, daß das Vorderrad (7) mit dem Rahmen (2) über eine sich nach vorne erstreckende Vorderradschwinge (3) und die Hinterradanordnung mit dem Rahmen (2) über eine sich nach hinten erstreckende Hinterradschwinge (4) gelenkig verbunden ist, die Vorderradschwinge (3) und die Hinterradschwinge (4) mit am Rahmen (2) angeordneten oberen und unteren Endanschlägen (2' und 3' bzw. 16 und 17) zusammenwirken und über Zugfedern (9) mit dem unterhalb der Führungshülse (12) liegenden unteren Ende der den Sattel (6) tragenden Sattelstütze (11) verbunden sind.

2. Laufrad nach Anspruch 1, <u>dadurch gekennzeichnet</u>, daß die Zugfedern (9) höhenverstellbar mit der Sattelstütze (11) verbunden sind.

3. Laufrad nach Anspruch 1, <u>dadurch gekennzeichnet</u>, daß die unteren Endanschläge (16 und 17) höheneinstellbar am Rahmen (2) angeordnet sind.

4. Laufrad nach den Ansprüchen 1 bis 3, <u>dadurch gekennzeichnet</u>, daß die Hinterradanordnung aus zwei spiegelbildlich zum Rahmen (2) liegenden Einzelrädern besteht.

5. Laufrad nach Anspruch 1 und 2, <u>dadurch gekennzeichnet</u>, daß die Zugfedern (9) als Gummifedern ausgebildet sind.

6. Laufrad nach den Ansprüchen 1 bis 5, <u>dadurch gekennzeichnet</u>, daß der Sattel (6) als ein mit einem Bezug umhülltes, hinsichtlich seines Innendrucks einstellbares Luftkissen ausgebildet ist.

**Claims**

1. Velocipede whose frame, extending approximately horizontally, carries in its central region, situated between the front wheel mounted for rotation by a handlebar in a fork tube fastened to the frame and the rear wheel arrangement, a guide sleeve which extends approximately vertically and which receives a vertically adjustable saddle support passing through it and carrying a saddle at its top end, characterized in that the front wheel (7) is pivotally connected to the frame (2) by a forwardly extending front wheel link (3) and the rear wheel arrangement is pivotally connected to the frame (2) by a rearwardly extending rear wheel link (4), and that the front wheel link (3) and the rear wheel link (4) cooperate with top and bottom end stops (2', 3' and 16, 17 respectively) and are connected by tension springs (9) to the bottom end, lying under the guide sleeve (12), of the saddle support (11) carrying the saddle (6).

2. Velocipede according to Claim 1, characterized in that the tension springs (9) are connected to the saddle support (11) in such a manner as to be vertically adjustable.

3. Velocipede according to Claim 1, characterized in that the bottom end stops (16, 17) are disposed on the frame (2) in such a manner as to be vertically adjustable.

4. Velocipede according to Claims 1 to 3, characterized in that the rear wheel arrangement consists of two individual wheels disposed in a mirror image arrangement in relation to the frame (2).

5. Velocipede according to Claims 1 and 2, characterized in that the tension springs (9) are in the form of rubber springs.

6. Velocipede according to Claims 1 to 5, characterized in that the saddle (6) is in the form of an air cushion which is enclosed in a cover and whose internal pressure is adjustable.

**Revendications**

1. Véhicule à roues actionnées au pied, dont le cadre sensiblement horizontal supporte, dans sa partie centrale située entre la roue avant maintenue pivotante par un guidon dans un tube de fourche fixé au cadre et l'agencement de roue arrière, un manchon de guidage sensiblement vertical qui reçoit, de manière réglable en hauteur, un support qui le traverse et qui supporte une selle à son extrémité supérieure, caractérisé en ce que la roue avant (7) est reliée de manière articulée avec le cadre (2) par l'intermédiaire d'un bras de roue avant (3) dirigé vers l'avant et l'agencement de roue arrière est relié de manière articulée avec le cadre (2) par l'intermédiaire d'un bras de roue arrière (4) dirigé vers l'arrière, le bras de roue avant (3) et le bras de roue arrière (4) coopérant avec des butées extrêmes supérieures et inférieures (2' et 3' respectivement, 16 et 17) disposées sur le cadre, et étant reliés, par l'intermédiaire de ressorts de traction (9), à l'extrémité inférieure, située sous le manchon de guidage (12), du support (11) supportant la selle (6).

2. Véhicule à roues actionnées au pied conforme à la revendication 1, caractérisé en ce que les ressorts de traction (9) sont reliés, de manière réglable en hauteur, au support de selle (11).

3. Véhicule à roues actionnées au pied conforme à la revendication 1, caractérisé en ce que les butées extrêmes inférieures (16 et 17) sont disposées, de manière réglable en hauteur, sur le cadre (2).

4. Véhicule à roues actionnées au pied conforme à l'une des revendications 1 à 3, caractérisé en ce que l'agencement de roue arrière est constitué de deux roues individuelles disposées symétriquement par rapport au cadre (2).

5. Véhicule à roues actionnées au pied conforme à la revendication 1 ou 2, caractérisé en ce que les ressorts de traction (9) sont conçus sous la forme de ressorts en caoutchouc.

6. Véhicule à roues actionnées au pied conforme à l'une des revendications 1 à 5, caractérisé en ce que la selle (6) est conçue sous la forme d'un coussin d'air qui est revêtu d'une garniture et dont la pression intérieure est réglable.